# EUROPÄISCHE PATENTSCHRIFT

(11) **EP 0 560 131 B1**
(45) Veröffentlichungstag und Bekanntmachung des Hinweises auf die Patenterteilung: **18.09.1996**
(21) Anmeldenummer: 93102916.9
(22) Anmeldetag: 25.02.1993
(51) Int. Cl.: C08F 255/00, C08F 8/42

(54) **Teilvernetzte Kunststoffmassen aus Propylencopolymerisaten**
Partially crosslinked polymer composition from propylene copolymers
Composition de polymère partiellement réticulée à base de copolymères de propylène

(30) Priorität: 07.03.1992 DE 4207313
(43) Veröffentlichungstag der Anmeldung: 15.09.1993
(73) Patentinhaber: BASF Aktiengesellschaft, 67063 Ludwigshafen (DE)
(72) Erfinder: Brosius, Sibylle, Dr., W-6700 Ludwigshafen (DE); Schwager, Harald, Dr., W-6720 Speyer (DE); Hahn, Susanne, Dr., W-6800 Mannheim 1 (DE); Marczinke, Bernd Lothar, Dr., W-6720 Speyer (DE)

(56) Entgegenhaltungen:
- EP-A- 0 134 941
- EP-A- 0 412 518
- DE-A- 3 520 151
- FR-A- 2 030 899
- CHEMICAL ABSTRACTS, vol. 98, no. 24, Juni 1983, Columbus, Ohio, US; abstract no. 199278y, 'CROSSLINKING POLYOLEFINS CONTAINING A VINYLSILICON COMPOUND WITH A SILANOL CONDENSATION CATALYST' Seite 36

## Beschreibung

Die vorliegende Erfindung betrifft teilvernetzte Kunststoffmassen mit einem Schmelzflußindex von 0,1 bis 100 g/ 10 min., bei 230°C und unter einem Gewicht von 2,16 kg, enthaltend
a) ein Polymerisat aus 25 bis 97 Gew.-% eines Propylencopolymerisats (I), das 0,1 bis 15 Gew.-% an einpolymerisierten C₂-C₁₀-Alk-1-enen enthält und aus 3 bis 75 Gew.-% eines weiteren Propylencopolymerisats (11), das 15 bis 80 Gew.-% einpolymerisierte C₂-Cᵢₒ-Alk-1-ene aufweist,
b) eine Organosilanverbindung der folgenden Formel (I)

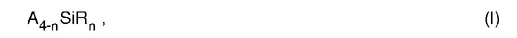

wobei A gleich oder verschieden ist und für einen Acryl- oder Methacrylsäureester oder für eine Vinylgruppe steht, R gleich oder verschieden ist und eine C₁-C₈-Alkoxy- oder C₁-C₈-Acetoxygruppe bedeutet und n für die Zahlen 1, 2 oder 3 steht,
erhältlich durch Umsetzung des Polymerisats a) mit der Organosilanverbindung b) in Anwesenheit eines radikalischen Initiators und eines Kondensationskatalysators, bei Temperaturen von 180 bis 280°C, Drücken von 1 bis 100 bar und mittleren Verweilzeiten des Reaktionsgemisches von 0,2 bis 10 Minuten.

Außerdem betrifft die vorliegende Erfindung ein Verfahren zur Herstellung der erfindungsgemäßen teilvernetzten Kunststoffmassen sowie deren Verwendung zur Herstellung von Folien und Formkörpern.

Es ist bekannt, Polyethylene und Copolymerisate des Ethylens mit Vinylsilanen zunächst zu pfropfen und anschließend mit Hilfe eines Silanolkondensationskatalysators zu vernetzen (DE-A 2 611 491, US-A 3 646 155, GB-A 1 406 680, GB-A 1 408 154). Auf diese Weise erhält man Polymerisate mit verbesserten mechanischen Eigenschaften, insbesondere einer höheren Festigkeit.

Die Vernetzung von Polypropylen oder Copolymerisaten des Propylens mit ungesättigten Silanen in Gegenwart eines Silanolkondensationskatalysators und eines Peroxids wird ferner in den Offenlegungsschriften DE-A 33 27 149, DE-A 35 20 151 und DE-A 35 20 106 beschrieben. Die dabei erhaltenen Polymerisate zeichnen sich durch eine hohe Kälteschlagzähigkeit und Formbeständigkeit aus.

Vernetzte Polymerisate weisen gegenüber nicht vernetzten Polymerisaten den Vorteil einer höheren mechanischen Stabilität auf. Vernetzte Materialien lassen sich aber aufgrund ihres geringen Schmelzflusses thermisch nicht mehr mit den in der Kunststofftechnik üblichen Methoden verformen (H. G. Elias "Makromoleküle", Verlag Hüthig & Wepf, 4. Auflage, Seite 1000-1003).

Für die Verarbeitung von Polymerisaten ist es deshalb notwendig, darauf zu achten, daß der Vernetzungsgrad der Polymerisate nicht zu hoch liegt, so daß diese noch mit den in der Kunststofftechnik üblichen Apparaturen verformt werden können. In diesem Zusammenhang ist es insbesondere für viele Anwendungen von Polymerisaten im Folienbereich wichtig, daß diese eine möglichst tiefe Siegeltemperatur aufweisen. Unter der Siegeltemperatur versteht man dabei die minimale Temperatur, bei der die Folie unter leichtem Druck auf einer geeigneten Unterlage zu haften beginnt. Ein Maß für die Siegeltemperatur ist die DSC-Schmelztemperatur.

Darüber hinaus benötigt man zur Herstellung von vielen Folien und Formkörpern Polymerisate mit einem verringerten Weißbruch, womit die bei vielen Kunststoffen während einer mechanischen Belastung auftretende Weißfärbung gemeint ist.

Der Erfindung lag daher die Aufgabe zugrunde, eine Kunststoffmasse zu entwickeln, die die Vorteile von vernetzten Polymerisaten bezüglich ihrer mechanischen Festigkeit mit denen von unvernetzten Polymerisaten bezüglich ihrer leichten Verarbeitbarkeit miteinander vereinigt und darüber hinaus eine möglichst tiefe Siegeltemperatur und einen verminderten Weißbruch aufweist.

Demgemäß wurden die eingangs definierten, teilvernetzten Kunststoffmassen gefunden.

Die erfindungsgemäßen teilvernetzten Kunststoffmassen weisen einen Schmelzflußindex von 0,1 bis 100 g/10 min., bei 230°C und unter einem Gewicht von 2,16 kg, auf. Der Schmelzflußindex entspricht dabei der Menge an Polymerisat, die innerhalb von 10 Minuten aus der nach DIN 53 735 genormten Prüfvorrichtung bei einer Temperatur von 230°C und unter einem Gewicht von 2,16 kg ausgepreßt wird. Besonders bevorzugt sind dabei solche teilvernetzten Kunststoffmassen, deren Schmelzflußindex 0,1 bis 50 g/10 min, bei 230°C und unter einem Gewicht von 2,16 kg, beträgt.

Die erfindungsgemäßen teilvernetzten Kunststoffmassen enthalten ein Polymerisat a) aus 25 bis 97 Gew.-% eines Propylencopolymerisats (I), das 0,1 bis 15 Gew.-% an einpolymerisierten C₂-C_{1Q}-Alk-1-enen enthält und aus 3 bis 75 Gew.-% eines weiteren Propylencopolymerisats (11), das 15 bis 80 Gew.-% einpolymerisierter C₂-Cᵢₒ-Alk-1-ene aufweist. Bevorzugt sind dabei Kunststoffmassen, deren Polymerisat a) 35 bis 95 Gew.-% eines Propylencopolymerisats (I) mit 0,2 bis 12 Gew.-% einpolymerisierter C₂-C₁₀-Alk-1-ene und 5 bis 65 Gew.-% eines Propylencopolymerisats (11) mit 20 bis 75 Gew.-% einpolymerisierter C₂-C₁₀-Alk-1-ene enthält. Unter diesen Kunststoffmassen werden solche besonders bevorzugt eingesetzt, deren Polymerisat a) aus 40 bis 93 Gew.-% eines Propylencopolymerisats (I) mit 0,3 bis 9 Gew.-% einpolymerisierter C₂-C₁₀-Alk-1-ene und aus 7 bis 60 Gew.-% eines Propylencopolymerisats (11) mit 25 bis 70 Gew.-% einpolymerisierter C₂-Cᵢₒ-Alk-1-ene besteht.

Unter einpolymerisierten C₂-C₁₀-Alk-1-enen sind in diesem Zusammenhang insbesondere Ethylen, But-1-en, Pent-1-en, Hex-1-en, Hept-1-en oder Oct-1-en oder Gemische aus diesen Comonomeren zu verstehen, wobei bevorzugt Ethylen oder But-1-en eingesetzt werden.

Die Herstellung des erfindungsgemäß zu verwendenden Polymerisats a) kann in den üblichen, für die Polymerisation von Propylen verwendeten Reaktoren entweder absatzweise oder bevorzugt kontinuierlich durchgeführt werden. Geeignete Reaktoren sind u.a. kontinuierlich betriebene Rührkessel, wobei man auch eine Reihe von mehreren hintereinander geschalteten Rührkesseln einsetzen kann. Die Reaktoren enthalten ein Festbett aus feinteiligem Polymerisat, welches üblicherweise durch Rühren in Bewegung gehalten wird

Das Verfahren kann mit den in der Polymerisationstechnik üblichen Ziegler-Natta-Katalysatoren durchgeführt werden. Diese enthalten u.a. neben einer titanhaitigen Feststoffkomponente noch Cokatalysatoren. Als Cokatalysatoren kommen dabei Aluminiumverbindungen zusammen mit Elektronendonorverbindungen in Frage.

Zur Herstellung der titanhaitigen Feststoffkomponente werden als Titanverbindungen im allgemeinen Halogenide oder Alkoholate des drei- oder vierwertigen Titans verwendet, wobei die Chloride des Titans, insbesondere Titantetrachlorid, bevorzugt sind. Vorteilhaft enthält die titanhaltige Feststoffkomponente einen feinteiligen Träger, wofür sich Silicium- und Aluminiumoxide, sowie Aluminiumsilicate der Bruttoformel Si0₂· aAl₂O₃, wobei a für einen Wert von 0,001 bis 2, insbesondere von 0,01 bis 0,5 steht, gut bewährt haben.

Die bevorzugt verwendeten Träger weisen einen Teilchendurchmesser von 0,1 bis 1000 µm, insbesondere von 10 bis 300 µm, ein Porenvolumen von 0,1 bis 10 cm³/g, insbesondere von 1,0 bis 5,0 cm³/g und eine spezifische Oberfläche von 10 bis 1000 m²/g, insbesondere von 100 bis 500 m2/g auf.

Weiter werden bei der Herstellung der titanhaltigen Feststoffkomponente u.a. Verbindungen des Magnesiums eingesetzt. Als solche kommen insbesondere Magnesiumhalogenide, Magnesiumalkyle und Magnesiumaryle, sowie Magnesiumalkoxy- und Magnesiumaryloxyverbindungen in Betracht, wobei bevorzugt Magnesiumdichlorid, Magnesiumdibromid und Magnesiumdi-(C₁-C₁₀-alkyl)-Verbindungen verwendet werden. Daneben kann die titanhaltige Feststoffkomponente noch Halogen, bevorzugt Chlor oder Brom, enthalten.

Außerdem enthält die titanhaltige Feststoffkomponente noch Elektronendonorverbindungen, beispielsweise mono- oder polyfunktionelle Carbonsäuren, Carbonsäureanhydride und Carbonsäureester, Ketone, Ether, Alkohole, Lactone, sowie phosphor- und siliciumorganische Verbindungen. Bevorzugt werden als Elektronendonorverbindungen innerhalb der titanhaltigen Feststoffkomponente Phthalsäurederivate der allgemeinen Formel II 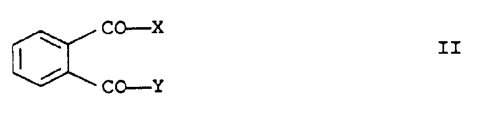 verwendet, wobei X und Y jeweils für Chlor oder einen C₁- bis C₁₀-Alkoxyrest oder gemeinsam für Sauerstoff stehen. Besonders bevorzugte Elektronendonorverbindungen sind Phthalsäureester, wobei X und Y C₁-C₈-Alkoxyreste; beispielsweise Methoxy-, Ethoxy-, Propyloxy- oder Butyloxyreste bedeuten.

Weiter bevorzugte Elektronendonorverbindungen innerhalb der titanhaltigen Feststoffkomponente sind u.a. Diester von 3- oder 4-gliedrigen, gegebenenfalls substituierten Cycloalkyl-1 ,2-dicarbonsäuren, sowie Monoester von, gegebenenfalls substituierten Benzophenon-2-carbonsäuren. Als Hydroxyverbindungen werden bei diesen Estern die bei Veresterungsreaktionen üblichen Alkohole verwendet, u.a. C₁- bis C₁₅-Alkanole, C₅- bis C₇-Cycloalkanole, die ihrerseits C₁- bis C₁₀-Alky-gruppen tragen können, ferner Phenole, Naphthole sowie die C₁-C₁₀-ACkylderivate dieser Verbindungen.

Die titanhaltige Feststoffkomponente kann nach an sich bekannten Methoden hergestellt werden. Beispiele dafür sind u.a. in der EP-A 45 975, der EP-A 86 473, der EP-A 171 200, der GB-A 2 111 066 und der US-A 4 857 613 beschrieben.

Bei der Herstellung der titanhaltigen Feststoffkomponente wird bevorzugt das nachstehende dreistufige Verfahren angewandt.

In der ersten Stufe versetzt man zunächst einen feinteiligen Träger, bevorzugt Siliciumdioxid oder Si0₂ . aAl₂O₃ mit einem Wassergehalt von 0,5 bis 5 Gew.-% - wobei a für eine Zahl im Bereich von 0,001 bis 2, insbesondere im Bereich von 0,01 bis 0,5 steht - mit einer Lösung der magnesiumhaltigen Verbindung in einem flüssigen Alkan, wonach man dieses Gemisch 0,5 bis 5 Stunden lang bei einer Temperatur zwischen 10 und 120°C rührt.

Vorzugsweise setzt man pro Mol des Trägers 0,1 bis 1 mol der Magnesiumverbindung ein. Anschließend fügt man unter ständigem Rühren ein Halogen oder einen Halogenwasserstoff, insbesondere Chlor oder Chlorwasserstoff im wenigstens zweifachen, bevorzugt im wenigstens fünffachen molaren Überschuß, bezogen auf die magnesiumhaltige Verbindung, hinzu. Nach etwa 30 bis 120 Minuten trennt man den Feststoff von der flüssigen Phase ab.

In der zweiten Stufe bringt man das auf diese Weise erhaltene Produkt in ein flüssiges Alkan ein und fügt danach ein C₁- bis Cₛ-Alkanol, insbesondere Ethanol, ein Halogenid oder ein Alkoholat des drei- oder vierwertigen Titans, insbesondere Titantetrachlorid, sowie eine Elektronendonorverbindung, insbesondere ein Phthalsäurederivat der allgemeinen Formel II hinzu. Dabei setzt man pro Mol Magnesium des aus der ersten Stufe erhaltenen Feststoffs 1 bis 5 mol, insbesondere 2 bis 4 mol, Alkanol, 2 bis 20 mol, insbesondere 4 bis 10 mol, des drei- oder vierwertigen Titans und 0,01 bis 1 mol, insbesondere 0,1 bis 1,0 mol, der Elektronendonorverbindung ein. Dieses Gemisch wird wenigstens eine Stunde lang bei einer Temperatur zwischen 10 und 150°C gerührt, der so erhaltene feste Stoff anschließend abfiltriert und mit einem flüssigen Alkan, bevorzugt mit Hexan oder Heptan, gewaschen.

In der dritten Stufe extrahiert man den aus der zweiten Stufe erhaltenen Feststoff einige Stunden lang bei Temperaturen zwischen 100 und 150°C mit überschüssigem Titantetrachlorid oder einer im Überschuß vorliegenden Lösung von Titantetrachlorid in einem inerten Lösungsmittel, vorzugsweise einem Alkylbenzol, wobei das Lösungsmittel wenigstens 5 Gew.-% Titantetrachlorid enthält. Danach wäscht man das Produkt solange mit einem flüssigen Alkan, bis der Gehalt der Waschflüssigkeit an Titantetrachlorid weniger als 2 Gew.-% beträgt.

Die auf diese Weise erhältliche titanhaltige Feststoffkomponente wird mit Cokatalysatoren als Ziegler-Natta-Katalysatorensystem verwendet. Als Cokatalysatoren kommen dabei Aluminiumverbindungen und Elektronendonorverbindungen in Betracht.

Geeignete Aluminiumverbindungen sind neben Trialkylaluminium auch solche Verbindungen, bei denen eine Alkylgruppe durch eine Alkoxygruppe oder durch ein Halogenatom, beispielsweise durch Chlor oder Brom, ersetzt ist.

Bevorzugt werden Trialkylaluminiumverbindungen verwendet, deren Alkylgruppen jeweils 1 bis 8 C-Atome aufweisen, beispielsweise Trimethyl-, Triethyl- oder Methyldiethylaluminium.

Bevorzugt verwendet man neben der Aluminiumverbindung noch als weiteren Cokatalysator Elektronendonorverbindungen wie beispielsweise mono- oder polyfunktionelle Carbonsäuren, Carbonsäureanhydride und Carbonsäureester, Ketone, Ether, Alkohole, Lactone, sowie phosphor- und siliciumorganische Verbindungen. Besonders geeignete Elektronendonorverbindungen sind dabei siliciumorganische Verbindungen der allgemeinen Formel III 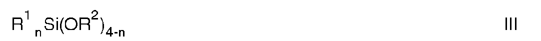 wobei R¹ gleich oder verschieden ist und eine C₁- bis C₂ₒ-Alkylgruppe, eine 5- bis 7-gliedrige Cycloalkylgruppe, die ihrerseits eine C₁- bis C₁₀-Alky-gruppe tragen kann, oder eine Cₛ- bis C₂ₒ-Aryl- oder Arylalkylgruppe bedeutet, R² gleich oder verschieden ist und eine C₁- bis C₂ₒ-Alkylgruppe bezeichnet und n für die Zahlen 1, 2 oder 3 steht. Besonders bevorzugt werden dabei solche Verbindungen, in denen R¹ eine C₁- bis C8-Alkylgruppeodereine5-bis7-gliedrige Cycloalkylgruppe, R² eine C₁- bis C₄-Alkylgruppe und n die Zahlen 1 oder 2 bedeuten.

Unter diesen Verbindungen sind Dimethoxydiisopropylsilan, Dimethoxyisobutylisopropylsilan, Dimethoxydiisobutylsilan, Dimethoxydicyclopentylsilan und Diethoxyisobutyisopropylsilan hervorzuheben.

Bevorzugt werden solche Katalysatorsysteme verwendet, bei denen das Atomverhältnis zwischen Aluminium aus der Aluminiumverbindung und Titan aus der titanhaitigen Feststoffkomponente 1:1 bis 800:1, insbesondere 2:1 bis 200:1, und das Molverhältnis zwischen der Aluminiumverbindung und der als Cokatalysator eingesetzten Elektronendonorverbindung 1:1 bis 100:1, insbesondere 2:1 bis 80:1 beträgt. Die Katalysatorbestandteile können in beliebiger Reihenfolge einzeln oder als Gemisch der Komponenten in das Polymerisationssystem eingebracht werden.

Mit Hilfe derartiger Katalysatorsysteme können die in den erfindungsgemäßen, teilvernetzten Kunststoffmassen enthaltenen Polymerisate a) hergestellt werden. Nach einem bevorzugten zweistufigen Verfahren wird dabei zunächst in einer ersten Polymerisationsstufe das Propylencopolymerisat (I), und daran anschließend in einer zweiten Polymerisationsstufe das Propylencopolymerisat (11) hergestellt.

Die Copolymerisation des Propylens und der entsprechenden C₂-C₁₀-Alk-1-ene wird in der ersten Polymerisationsstufe üblicherweise bei einem Druck von 20 bis 40 bar, einer Temperatur von 60 bis 90°C und einer mittleren Verweilzeit des Reaktionsgemisches von 1 bis 5 Stunden durchgeführt. Bevorzugt sind bei der Herstellung des Propylencopolymerisats (I) Drücke von 25 bis 35 bar, Temperaturen von 65 bis 85°C und mittlere Verweilzeiten von 1,5 bis 4 Stunden. Vorzugsweise wählt man dabei die Reaktionsbedingungen so, daß in dieser ersten Polymerisationsstufe pro mmol der Aluminiumkomponente 0,05 bis 2 kg des Propylencopolymerisats (I) gebildet werden. Als C₂-C₁₀-Alk-1-en wird dabei insbesondere Ethylen und But-1-en, oder ein Gemisch aus diesen Comonomeren verwendet. Zur Herstellung des Propylencopolymerisats (I) wird das Propylen mit den Comonomeren in der Weise copolymerisiert, daß das Verhältnis zwischen dem Partialdruck des Propylens und dem der Comonomeren auf 10:1 bis 1000: 1, insbesondere auf 15:1 bis 500: 1, eingestellt wird.

Das hierbei gebildete Propylencopolymerisat (I) wird nach Beendigung der Reaktion zusammen mit dem Katalysator aus der ersten Polymerisationsstufe ausgetragen und in die zweite Polymerisationsstufe eingeführt, wo das Propylencopolymerisat (11) hergestellt wird.

Dies erfolgt in der zweiten Polymerisationsstufe dadurch, daß in Anwesenheit des Propylencopolymerisats (I) Propylen zusammen mit einem oder mehreren C₂-C₁₀-Alk-1-enen bei Drükken von 5 bis 25 bar, Temperaturen von 30 bis 80°C und mittleren Verweilzeiten des Reaktionsgemisches von 1 bis 5 Stunden polymerisiert wird. Bevorzugt sind dabei Drücke von 10 bis 20 bar, Temperaturen von 40 bis 70°C und mittlere Verweilzeiten von 1,5 bis 4 Stunden. Üblicherweise liegen dabei die Drücke in der zweiten Polymerisationsstufe um wenigstens 7, vorzugsweise um wenigstens 10 bar unter denen in der ersten Polymerisationsstufe. Als C₂-C₁₀-Alk-1-ene werden dabei insbesondere Ethylen und But-1-en, oder ein Gemisch aus diesen Comonomeren eingesetzt. Zur Herstellung des Copolymerisats (11) wird das Propylen mit den Comonomeren in der Weise copolymerisiert, daß das Verhältnis zwischen dem Partialdruck des Propylens und dem der Comonomeren auf 0,5:1 bis 20:1, insbesondere auf 0,5:1 bis 15:1, eingestellt wird. Durch geeignete Wahl der Polymerisationsparameter sollte außerdem darauf geachtet werden, daß das Gewichtsverhältnis zwischen den in der ersten und den in der zweiten Polymerisationsstufe umgesetzten Monomeren im Bereich von 0,5:1 bis 20:1, insbesondere im Bereich von 0,6:1 bis 10:1, liegt.

Die Schmelzflußindizes der auf diese Weise erhältlichen Polymerisate a) liegen im Bereich von 0,1 bis 100, insbesondere im Bereich von 0,5 bis 50 g/10 min, bei 230°C und 2,16 kg, nach DIN 53 735. Der Schmelzflußindex entspricht dabei derjenigen Menge an Polymerisat, die bei 230°C und einem Gewicht von 2,16 kg aus der nach DIN 53 735 genormten Prüfvorrichtung ausgetragen wird.

Weiterhin enthalten die erfindungsgemäßen, teilvernetzten Kunststoffmassen eine Organosilanverbindung b) der folgenden Formel (I) als Vernetzer, 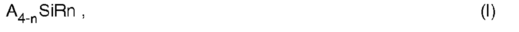 wobei A gleich oder verschieden ist und für einen Acryl- oder Methacrylsäureester oder für eine Vinylgruppe steht, R gleich oder verschieden ist und eine C₁-C₈-Alkoxy-oder C₁-C₈-Acetoxygruppe bedeutet und n für die Zahlen 1, 2 oder 3 steht. Bevorzugt werden dabei solche Organosilanverbindungen b) eingesetzt, bei denen n für die Zahl 3 steht. Unter diesen Verbindungen sind insbesondere 3-Methacryloxypropyltrimethoxysilan, Vinyltrimethoxysilan und Vinyltriethoxysilan hervorzuheben. In geringem Umfang können neben der Organosilanverbindung b) noch Ester der Acryl- bzw Methacrylsäure als weitere Vernetzer verwendet werden.

Die erfindungsgemäßen, teilvernetzten Kunststoffmassen sind erhältlich durch Umsetzung des Polymerisats a) mit der Organosilanverbindung b) in Anwesenheit eines radikalischen Initiators und eines Kondensationskatalysators bei Temperaturen von 180 bis 280°C, Drücken von 1 bis 100 bar und mittleren Verweilzeiten des Reaktionsgemisches von 0,2 bis 10 Minuten. Bevorzugt sind dabei Temperaturen von 190 bis 260°C, Drücke von 1 bis 60 bar und mittlere Verweilzeiten von 0,2 bis 5 Minuten. Die Umsetzung der einzelnen Komponenten erfolgt in den in der Kunststoffverarbeitung üblicherweise zur Vereinigung von Stoffen eingesetzten Apparaturen, beispielsweise in Trommmelmischern, in Mühlen, in Schnecken- oder Scheibenextrudern, in Walzwerken oder Knetern.

Als radikalische Initiatoren werden vorzugsweise organische Peroxide oder Azoverbindungen eingesetzt. Bevorzugt werden dabei solche organischen Peroxidverbindungen verwendet, die bei einer Temperatur von 210°C Halbwertszeiten von 1 bis 30 Sekunden aufweisen. Innerhalb dieser Verbindungen sind insbesondere Dicumylperoxid, Monocumyl(tert.butyl)-peroxid, Di(tert.butyl)peroxid, 2,5-Dimethyl-2,5-di(tert.butylperoxy)hexan und 2,5-Dimethyl-2,5-di(tert.butyiperoxy)hexin(3) hervorzuheben.

Als Kondensationskatalysatoren eignen sich insbesondere Carbonsäuresalze des Zinns, Eisens, Bleis, Zinks oder des Titans, wobei die Carbonsäuresalze des Zinns bevorzugt sind. Besonders geeignet sind dabei Verbindungen wie Dibutylzinndilaurat, Dibutylzinndiacetat oder Dibutylzinnoctoat. Daneben können auch Chelate der Titansäure oder Alkylamine eingesetzt werden. Zur Beschleunigung der Umsetzung des Polymerisats a) mit derOrganosilanverbindung b) können dem Reaktionsgemisch ferner noch Wasser oder wasserabspaltende Mittel, beispielsweise Hydrate, hinzugefügt werden.

Die erfindungsgemäße teilvernetzte Kunststoffmasse enthält neben dem Polymerisat a) und der Organosilanverbindung b) noch als weiteren Bestandteil ein statistisch verteiltes Ethylencopolymerisat c), mit 5 bis 20 Gew-% an einpolymerisierten C₃-C₁₀-Alk-1-enen, dessen Dichte bei Raumtemperatur 0,89 bis 0,925 g/cm³ beträgt. Bevorzugt wird dabei ein solches statistisch verteiltes Ethylencopolymerisat c) eingesetzt, das 8 bis 20 Gew.-% einpolymerisierter C₃-C_{1.}-Alk-ene enthält. Unter einpolymerisierten C₃₋C₁ₒ-Alk-1-enen sind in diesem Zusammenhang insbesondere Propylen, But-1-en, Pent-1-en, Hex-1-en, Hept-1-en oder Oct-1 -en oder Gemische aus diesen Comonomeren zu verstehen, wobei bevorzugt Propylen, But-1-en, Hex-1-en oder Oct-1-en verwendet werden.

Die Herstellung derartiger statistisch verteilter Ethylencopolymerisate erfolgt durch Niederdruckpolymerisation der Comonomere mit metallhaltigen Katalysatoren, beispielsweise mit Hilfe von titan- und aluminiumhaltigen Ziegler-Katalysatoren. Die Polymerisationsreaktion kann dabei mit den in der Technik üblichen Reaktoren, beispielsweise Rührkesseln, sowohl in der Gasphase, in Lösung oder auch in einer Aufschlämmung durchgeführt werden. In einem bevorzugt angewandten Verfahren stellt man die erfindungsgemäß eingesetzten Ethylencopolymersate c) durch Gasphasenpolymerisation mit Hilfe von Ziegler-Katalysatoren bei Drücken von 10 bis 100 bar, Temperaturen von 30 bis 100°C und mittleren Verweilzeiten von 0,5 bis 5 Stunden her. Bei diesem Verfahren wird das Partialdruckverhältnis zwischen Ethylen und den C₃-Cᵢₒ-Alk-1-enen auf 2:1 bis 100:1 eingestellt.

Weiterhin kann es sich empfehlen, der erfindungsgemäß einzusetzenden Polymermischung noch ein kautschukartiges Material d) mit einer Shore A-Härte von 30 bis 90 (nach DIN 53 505) hinzuzufügen Bei der Härtebestimmung nach Shore A wird die Eindringtiefe eines Kegelstumpfes in das Probematerial bestimmt. Beispiele für kautschukartige Materialien d) sind u.a. Styrol-Butadien-Blockcopolymerisate, Styrol-Ethylen-Buten-Terpolymerisate, Acrylatkautschuke, Ethylen-Propylen-Kautschuke, Ethylen-Propylen-Dien-Kautschuke" Isoprenkautschuke, Styrol-Isoprenkautschuke, Polyisobutylenkautschuke, Ethylen-Vinylacetat-Copolymerisate, Polyurethankautschuke, Nitril-Kautschuke sowie Naturkautschuke. Bevorzugt werden dabei Styrol-Ethylen-Buten-Terpolymerisate, Ethylen-Propylen-Kautschuke, Ethylen-Propylen-Dien-Kautschuke, Polyisobutylenkautschuke und Acrylatkautschuke verwendet.

Dieses kautschukartige Material d) kann ebenso wie das statistisch verteilte Ethylencopolymerisat c) dem Polymerisat a) sowohl vor als auch nach dessen Umsetzung mit der Organosilanverbindung b) beigemischt werden.

Die in der erfindungsgemäßen, teilvernetzten Kunststoffmasse vorliegende Polymermischung enthält bevorzugt, bezogen auf 100 Gew.-Teile, mindestens 40 Gew.-Teile Polymerisat a), bis zu 60 Gew.-Teile statistisch verteiltes Ethylencopolymerisat c) sowie 0 bis 40 Gew.-Teile kautschukartiges Material d) Besonders bevorzugt ist dabei eine solche Polymermischung, die, bezogen auf 100 Gew.-Teile, aus mindestens 50 -Teilen Polymerisat a), bis zu 30 Gew.-Teilen statistisch verteiltes Ethylencopolymerisat c), sowie 0 bis 25 Gew.-Teile kautschukartiges Material d) besteht. Nach einem möglichen Herstellungsverfahren werden die einzelnen Bestandteile der Polymermischung, also a), c) sowie gegebenenfalls d) zunächst in einer Mischapparatur, beispielsweise einem Extruder oder einer Mühle vermengt und anschließend durch Umsetzung mit der Organosilanverbindung b) teilweise vernetzt. Nach einem anderen Herstellungsverfahren wird zunächst das Polymerisat a) mit der Organosilanverbindung b) umgesetzt und danach c) und gegebenenfalls d) hinzugemischt.

Zur Herstellung der erfindungsgemäßen, teilvernetzten Kunststoffmasse werden pro 100 Gew.-Teile der Polymermischung aus dem Polymerisat a), sowie dem statistisch verteilten Ethylencopolymerisat c) und gegebenenfalls dem kautschukartigen Material d) vorzugsweise 0,05 bis 5 Gew.-Teile der Organosilanverbindung b), 0,001 bis 2 Gew.-Teile des radikalischen Initiators und 0,001 bis 0,1 Gew.-Teile des Kondensationskatalysators verwendet. Dabei findet eine teilweise Vernetzung der Kunststoffmasse statt.

In einem besonders bevorzugten Herstellungsverfahren werden dem Polymerisat a) unmittelbar nach dessen Herstellung entsprechende Mengen der Organosilanverbindung b), des radikalischen Initiators, des Kondensationskatalysators, sowie des statistisch verteilten Ethylencopolymerisats c) und gegebenenfalls des kautschukartigen Materials d) in einer, an den Herstellungsreaktor des Polymerisats a) angeschlossenen Mischapparatur hinzugefügt. Nach Beendigung der Umsetzung wird die teilweise vernetzte Kunststoffmasse aus der Mischapparatur ausgetragen und in einem daran angeschlossenen Schachttrockner von flüchtigen Ausgangsprodukten getrennt. Die auf diese Weise erhaltene Kunststoffmasse ist direkt weiterverarbeitbar.

Durch die Wahl der speziellen Polymerisate a), der Organosilanverbindungen b), sowie der statistisch verteilten Ethylencopolymerisate c) und gegebenenfalls der kautschukartigen Materialien d) erhält man teilvernetzte Kunststoffmassen, die sich insbesondere durch eine niedrige Siegeltemperatur und einen verringerten Weißbruch auszeichnen. Darüber hinaus sind ihre Bindenahtfestigkeiten für die Verwendung im Spritzgußbereich und die Tiefzieheigenschaften der aus diesen Polymerisaten erhaltenen Folien verbessert. Die erfindungsgemäßen teilvernetzten Kunststoffmassen sind auf einfache Weise erhältlich, dasowohl die Pfropfung mit der Organsilanverbindung b) als auch die anschließende teilweise Vernetzung in einem Herstellungsschritt durchgeführt werden können. Sie können auch zusammen mit den, in der Kunststofftechnik üblichen Additiven, beispielsweise Stabilisatoren, Flammschutzmitteln, Weichmachern, Nukleierungsmitteln oder Färbungsmitteln verwendet werden.

Die erfindungsgemäßen, teilweise vernetzten Kunststoffmassen eignen sich aufgrund ihrer relativ guten Verarbeitbarkeit insbesondere als Materialien für den Spritzguß, das Blasformen, die Extrusion und die Herstellung von Schäumen. Sie können dabei zur Herstellung von Formkörpern, Folien und Überzugsmaterialien verwendet werden.

### Beispiele

Die Beispiele 1-6, sowie die Vergleichsbeispiele A-D wurden in einem Zweischneckenextruder der Firma Berstorff mit einem Länge/Durchmesser-Verhältnis von 33 durchgeführt. Die dabei verwendeten Polymerisate a) wurden als Grieß oder Granulat dem Zweischneckenextruder zugeführt und dort mit der jeweils eingesetzten Organosilanverbindung b), dem radikalischen Initiator und dem Kondensationskatalysator aufgeschmolzen.

In den Beispielen 4, 5 und 6 wurde neben den Polymerisaten a) zusätzlich noch ein statistisch verteiltes Ethylencopolymerisat c) und ein kautschukartiges Material d) mitverwendet. Die Polymerisate c) und d) wurden in den Beispielen 5 und 6 nach der teilweisen Vernetzung des Polymerisats a) in den Zweischneckenextruder eingeführt.

### Beispiel 1 (Vergleich)

100 Gew.-Teile eines Polymerisats a) aus 87 Gew.-% eines Propylencopolymerisats mit 2,6 Gew.-% einpolymerisiertem Ethylen und 13 Gew.-% eines Propylencopolymerisats mit 60 Gew.-% einpolymerisiertem Ethylen wurden im Zweischneckenextruder mit 0,8 Gew.-Teilen 3-Methacryloxypropyltrimethoxysilan, 0,1 Gew.-Teilen 2,5-Dimethyl-2,5-di (tert.-butylperoxy)hexan und 0,02 Gew.-Teilen Dibutylzinndilaurat vermischt und granuliert. Der Schmelzflußindex des Polymerisats a) betrug 2,6 g/10 min., bei 230°C und 2,16 kg, nach DIN 53 735. Die Vermischung erfolgte bei einer Temperatur von 220°C, einem Druck von 20 bar und einer mittleren Verweilzeit von 30 Sekunden. Danach wurde das Gemisch aus dem Zweischneckenextruder ausgetragen und anschließend wurde es unter Zugabe von Wasser bei 90°C 16 Stunden lang aufbereitet.

In der Tabelle 1 sind die entsprechenden Werte für die dabei erhaltenen teilvernetzten Kunststoffmassen in Bezug auf den Schmelzflußindex, die Siegeltemperatur und die Bindenahtfestigkeit aufgeführt.

### Vergleichsbeispiel A

Das in Beispiel 1 verwendete Polymerisat a) wurde ohne Vernetzungsreaktion aber unter ansonsten gleichen Bedingungen im Zweischneckenextruder granuliert.

In der Tabelle 1 sind für dieses Polymerisat a) die entsprechenden Werte in Bezug auf den Schmelzflußindex, die Siegeltemperatur und die Bindenahtfestigkeit aufgeführt.

### Vergleichsbeispiel B

100 Gew.-Teile eines Propylenpolymerisats aus 55 Gew.-% Propylenhomopolymerisat und 45 Gew.-% eines Propylencopolymerisats mit 51 Gew.-% einpolymerisiertem Ethylen und einem Schmelzflußindex von 2,1 g/10 min, bei 230°C und 2,16 kg, nach DIN 53 735, wurden im Zweischneckenextruder mit 0,6 Gew.-Teilen Vinyltrimethoxysilan, 0,044 Gew.-Teilen 2,5-Dimethyl-2,5-di(tert.butylperoxy)hexan und 0,03 Gew.Teilen Dibutylzinndilaurat vermischt und granuliert. Die Vermischung und die sich daran anschließende Aufarbeitung erfolgte wie im Beispiel 1 beschrieben.

In der Tabelle 2 sind für dieses Polymerisat die entsprechenden Werte in Bezug auf den Schmelzflußindex, die Siegeltemperatur, den Weißbruch und die Shore D-Härte aufgeführt.

### Beispiel 2 (Vergleich)

100 Gew.-Teile eines Polymerisats a) aus 55 Gew.-% eines Propylencopolymerisats mit 2,5 Gew.-% einpolymerisiertem Ethylen und 45 Gew.-% eines Propylencopolymerisats mit 60 Gew.-% einpolymerisiertem Ethylen wurden im Zweischneckenextruder mit 0,2 Gew.-Teilen Vinyltrimethoxysilan, 0,02 Gew.-Teilen 2,5-Dimethyl-2,5-di(tert.butylper- oxy)hexan und 0,01 Gew.-Teilen Dibutylzinndilaurat vermischt und granuliert. Der Schmelzflußindex des Polymerisats a) betrug 0,9 g/10 min., bei 230°C, und 2,16 kg, nach DIN 53 735. Die Vermischung erfolgte bei einer Temperatur von 220°C, einem Druck von 20 bar und einer mittleren Verweilzeit von 30 Sekunden. Danach wurde das Gemisch aus dem Zweischneckenextruder ausgetragen und anschließend wurde es unter Zugabe von Wasser bei 90°C 16 Stunden lang aufbereitet.

In der Tabelle 2 sind die entsprechenden Werte für die dabei erhaltenen teilvernetzten Kunststoffmassen in Bezug auf den Schmelzflußindex, die Siegeltemperatur, den Weißbruch und die Shore D-Härte aufgeführt.

### Beispiel 3 (Vergleich)

100 Gew.-Teile eines Polymerisats a) aus 54 Gew.-% eines Propylencopolymerisats mit 2,6 Gew.-% einpolymerisiertem Ethylen und 46 Gew.-% eines Propylencopolymerisats mit 47 Gew.-% einpolymerisiertem Ethylen wurden im Zweischneckenextruder mit 0,4 Gew.-Teilen Vinyltrimethoxysilan, 0,04 Gew.-Teilen 2,5-Dimethyl-2, 5-di(tert,butylper- oxy) hexan und 0,02 Gew.-Teilen Dibutylzinndilaurat vermischt und granuliert. Der Schmelzflußindex des Polymerisats a) betrug 1,6 g/10 min., bei 230°C und 2,16 kg, nach DIN 53 735. Die Vermischung erfolgte bei einer Temperatur von 220°C, einem Druck von 20 bar und einer mittleren Verweilzeit von 30 Sekunden. Danach wurde das Gemisch aus dem Zweischneckenextruder ausgetragen und anschließend wurde es unter Zugabe von Wasser bei 90°C 16 Stunden lang aufbereitet.

In der Tabelle 2 sind die entsprechenden Werte für die dabei erhaltenen teilvernetzten Kunststoffmassen in Bezug auf den Schmelzflußindex, die Siegeltemperatur, den Weißbruch und die Shore D-Härte aufgeführt.

### Beispiel 4

77,5 Gew.-Teile des im Beispiel 3 verwendeten Polymerisats a), wurden mit 7,5 Gew.-Teilen eines statistisch verteilten Ethylencopolymerisats c) mit 16 Gew.-% einpolymerisiertem But-l-en, einem Schmelzflußindex von 1,4 g/10 min, bei 230°C und 2,16 kg, nach DIN 53 735 und einer Dichte von 0,90 g/cm³, sowie 15 Gew.-Teilen eines Polyisobutylens als kautschukartiges Material d) mit einem Schmelzflußindex von 0,3 g/10 min., bei 190°C und 21,6 kg, nach DIN 53735 und einer Shore A-Härte von 30 im Zweischneckenextrudervernetzt und granuliert. Die Vernetzung erfolgte dabei mit Hilfe von 0,6 Gew.-Teilen Vinyltrimethoxysilan, 0,06 Gew.-Teilen 2,5-Dimethyl-2,5-di(tert.butylperoxy)hexan und 0,03 Gew.-Teilen Dibutylzinndilaurat. Außerdem enthielt die Mischung noch 0,25 Gew.-Teile Ruß. Die Vernetzung erfolgte bei einer Temperatur von 220°C, einem Druck von 20 bar und einer mittleren Verweilzeit von 30 Sekunden. Danach wurde das Gemisch aus dem Zweischneckenextruder ausgetragen und anschließend wurde es unter Zugabe von Wasser bei 90°C 16 Stunden lang aufbereitet.

Von der erhaltenen teilvernetzten Polymermischung wurde nach dem Castfilm-Verfahren in einer Breitschlitzfolienanlage bei einer Massentemperatur von ca. 240°C und einem Massendruck von ca. 110 bar eine Breitschlitzfolie von 420 mm Breite und 0,3 mm Dicke hergestellt.

In der Tabelle 3 sind die entsprechenden Werte für die dabei erhaltenen teilvernetzten Kunststoffmassen in Bezug auf den Schmelzflußindex, die Shore D-Härte und den Durchhang bei Aufheizen der Folie aufgeführt.

### Vergleichsbeispiele C

Die im Beispiel 4 verwendete Mischung aus dem Polymerisat a), dem statistisch verteilten Ethylencopolymerisat c) und dem Polyisobutylen d) wurde zusammen mit der entsprechenden Menge von Ruß analog dem erfindungsgemäßen Beispiel4 granuliert und aufgearbeitet, jedoch nicht vernetzt. Darüber hinaus wurde entsprechend dem Beispiel 4 eine Breitschlitzfolie von 420 mm Breite und 0,3 mm Dicke hergestellt.

In der Tabelle 3 sind für dieses Polymerisat die entsprechenden Werte in Bezug auf den Schmelzflußindex, die Shore D-Härte und den Durchhang bei Aufheizen der Folie aufgeführt.

### Beispiel 5

70 Gew.-Teile des im Beispiel 2 verwendeten Polymerisats a) wurden mit 10 Gew.-Teilen eines statistisch verteilten Ethylencopolymerisats c) mit 16 Gew.-% einpolymerisiertem But-1-en, einem Schmelzflußindex von 1,4 g/10 min., bei 230°C und 2,16 kg, nach DIN 53 735 und einer Dichte von 0,90 g/cm³, sowie 20 Gew.-Teilen eines Ethylen-Propylencopolymerisats als kautschukartiges Material d) mit einem Propylengehalt von 25 Gew.-%, einem Schmelzflußindex von 3 g/10 0 min., bei 230°C und 10 kg, nach ASTM D 1238 und einer Shore A-Härte von 84 im Zweischneckenextruder granuliert. Dabei wurde zunächst das Polymerisat a) vernetzt und anschließend c) und d) hinzugefügt. Die Vernetzung erfolgte dabei mit Hilfe von 0,2 Gew.-Teilen Vinyltrimethoxysilan, 0,02 Gew.-Teilen 2,5-Dimethyl-2,5-di(tert.butylperoxy) hexan und 0,01 Gew.-Teilen Dibutylzinndilaurat. Außerdem enthielt die Mischung noch 0,25 Gew.-Teile Ruß. Die Vernetzung erfolgte bei einer Temperatur von 220°C, einem Druck von 20 bar und einer mittleren Verweilzeit von 30 Sekunden. Danach wurde das Gemisch aus dem Zweischneckenextruder ausgetragen und anschließend wurde es unter Zugabe von Wasser bei 90°C 16 Stunden lang aufbereitet.

Von der erhaltenen teilvernetzten Polymermischung wurde nach dem Castfilm-Verfahren in einer Breitschlitzfolienanlage bei einer Massentemperatur von ca. 240°C und einem Massendruck von ca. 110 bar eine Breitschlitzfolie von 420 mm Breite und 0,3 mm Dicke hergestellt.

In der Tabelle 4 sind die entsprechenden Werte für die dabei erhaltenen teilvernetzten Kunststoffmassen in Bezug auf den Schmelzflußindex, die Shore D-Härte und den Zusammenhang zwischen Temperatur und Homogenität im Tiefziehexperiment aufgeführt.

### Vergleichsbeispiel D

Die im Beispiel 5 verwendete Mischung aus dem Polymerisat a), dem statistisch verteilten Ethylencopolymerisat c) und dem kautschukartigen Material d) wurde zusammen mit der entsprechenden Menge von Ruß analog dem erfindungsgemäßen Beispiel 5 granuliert und aufgearbeitet, jedoch nicht vernetzt. Darüber hinaus wurde entsprechend dem Beispiel 5 eine Breitschlitzfolie von 420 mm Breite und 0,3 mm Dicke hergestellt.

In der Tabelle 4 sind für dieses Polymerisat die entsprechenden Werte in Bezug auf den Schmelzflußindex, die Shore D-Härte und den Zusammenhang zwischen Temperatur und Homogenität im Tiefziehexperiment aufgeführt

### Beispiel 6

70 Gew.-Teile des im Beispiel 3 verwendeten Polymerisats a) wurden mit 10 Gew.-Teilen eines statistisch verteilten Ethylencopolymerisats c) mit 16 Gew.-% einpolymerisiertem But-1-en, einem Schmelzflußindex von 1,4 g/10 min., bei 230°C und 2,16 kg, nach DIN 53 735 und einer Dichte von 0,90 g/cm³, sowie 20 Gew.-Teilen eines Ethylen-Propylencopolymerisats als kautschukartiges Material d) mit einem Propylengehalt von 25 Gew.-%, einem Schmelzflußindex von 3 g/10 min., bei 230°C und 10 kg, nach ASTM D 1238 und einer Shore A-Härte von 84 im Zweischneckenextruder granuliert. Dabei wurde zunächst das Polymerisat a) vernetzt und anschließend c) und d) hinzugefügt. Die Vernetzung erfolgte dabei mit Hilfe von 0,4 Gew.-Teilen Vinyltrimethoxysilan, 0,04 Gew.-Teilen 2,5-Dimethyl-2,5-di(tert.butylperoxy) hexan und 0,02 Gew.-Teilen Dibutylzinndilaurat. Außerdem enthielt die Mischung noch 0,25 Gew.-Teile Ruß. Die Vernetzung erfolgte bei einer Temperatur von 220°C, einem Druck von 20 bar und einer mittleren Verweilzeit von 30 Sekunden. Danach wurde das Gemisch aus dem Zweischneckenextruder ausgetragen und anschließend wurde es unter Zugabe von Wasser bei 90°C 16 Stunden lang aufbereitet.

Von der erhaltenen teilvernetzten Polymermischung wurde nach dem Castfilm-Verfahren in einer Breitschlitzfolienanlage bei einer Massentemperatur von ca. 240°C und einem Massendruck von ca. 110 bar eine Breitschlitzfolie von 420 mm Breite und 0,3 mm Dicke hergestellt.

In der Tabelle 4 sind die entsprechenden Werte für die dabei erhaltenen teilvernetzten Kunststoffmassen in Bezug auf den Schmelzflußindex, die Shore D-Härte und den Zusammenhang zwischen Temperatur und Homogenität im Tiefziehexperiment aufgeführt.

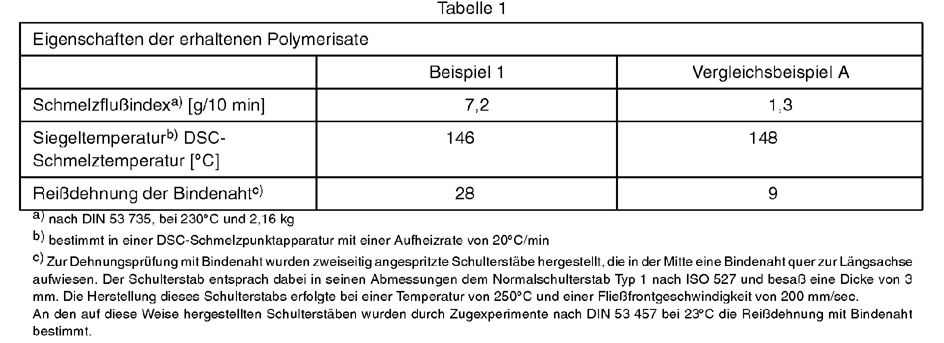

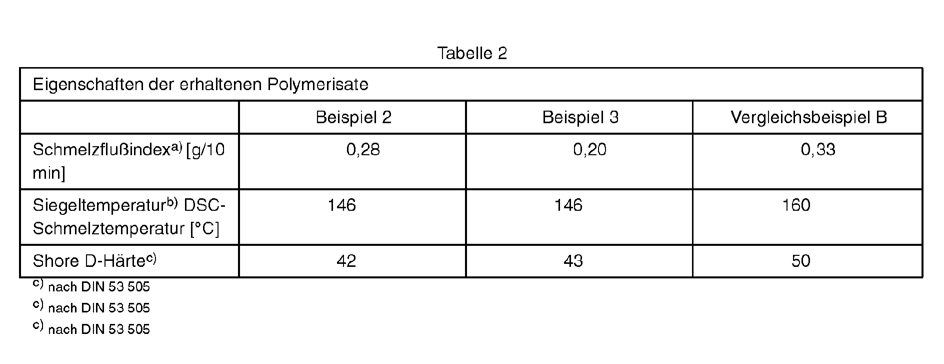

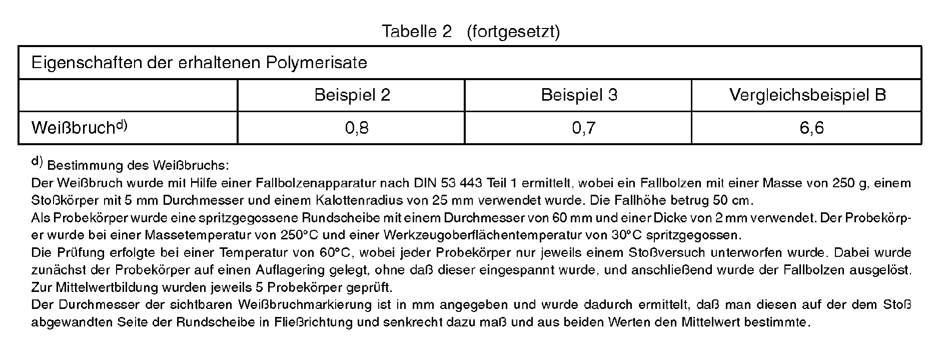

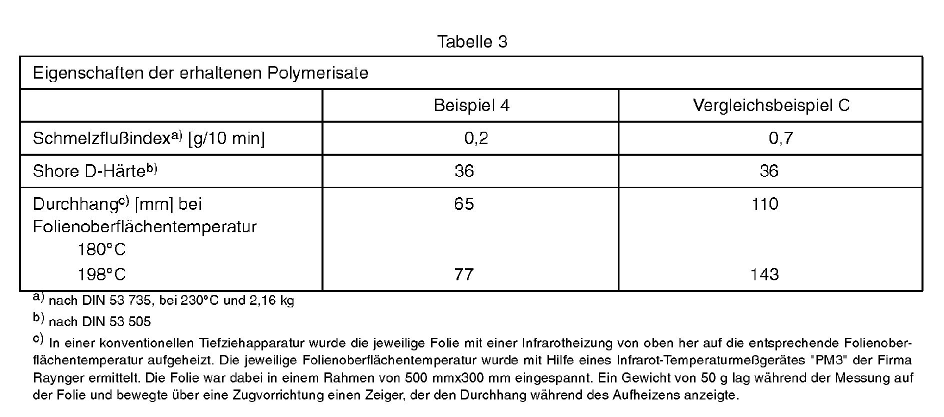

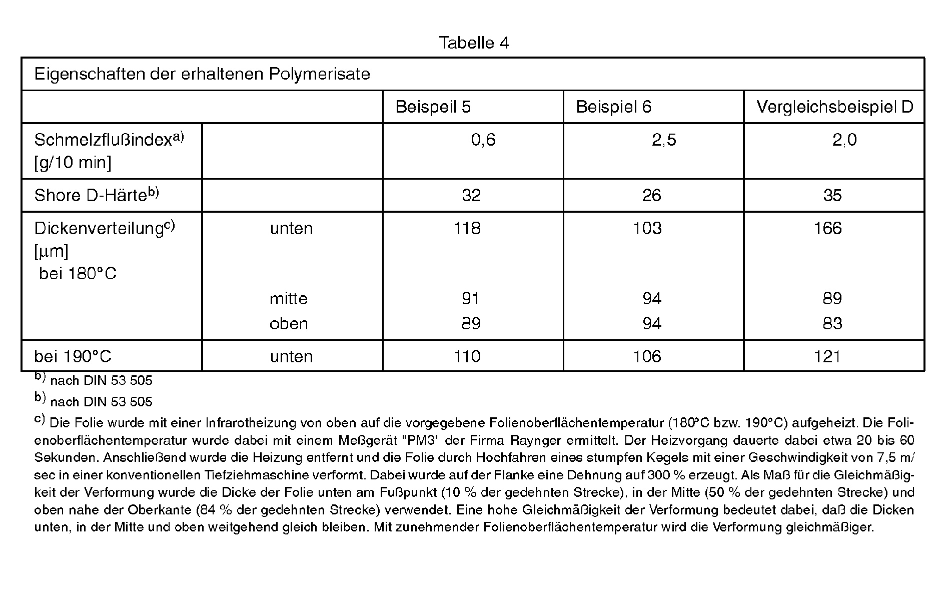

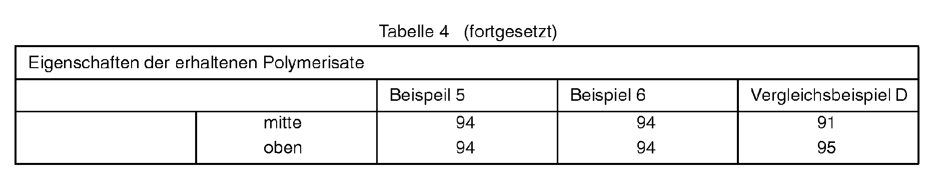

Aus einem Vergleich der erfindungsgemäßen Beispiele 1 bis 6 mit den Vergleichsbeispielen A bis D geht dabei hervor, daß die erfindungsgemäßen teilvernetzten Polymerisate eine verringerte Siegeltemperatur, eine verringerte Neigung zum Weißbruch und eine verbesserte Bindenahtfestigkeit aufweisen. Darüber hinaus zeigen die aus den erfindungsgemäßen, teilvernetzten Polymerisaten erhaltenen Folien bessere Tiefzieheigenschaften (verringerter Durchhang und gleichmäßigere Dickenverteilung) wie die der Vergleichsbeispiele A bis D.

## Patentansprüche

1. Teilvernetzte Kunststoffmassen mit einem Schmelzflußindex von 0,1 bis 100 g/10 min., bei 230°C und unter einem Gewicht von 2,16 kg, enthaltend
a) ein Polymerisat aus 25 bis 97 Gew.-% eines Propylencopolymerisats (I), das 0,1 bis 15 Gew.-% an einpolymerisierten C₂-C₁₀-Alk-1-enen enthält und aus 3 bis 75 Gew.-% eines weiteren Propylencopolymerisats (11), das 15 bis 80 Gew.-% einpolymerisierte C₂-C₁₀-Alk-1-ene aufweist,
b) eine Organosilanverbindung der folgenden Formel (I) 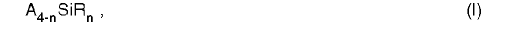
(c) ein statistisch verteiltes Ethylencopolymerisat mit 5 bis 20 Gew.-% an einpolymerisierten C₃-C₁₀-Alk-1-enen und einer Dichte bei Raumtemperatur von 0,89 bis 0,925 g/cm³
wobei A gleich oder verschieden ist und für einen Acryl- oder Methacrylsäureester oder für eine Vinylgruppe steht, R gleich oder verschieden ist und eine C₁-C₈-Alkoxy-oderC₁-C₈-Acetoxygruppe bedeutet und n für die Zahlen 1, 2 oder 3 steht,
erhältlich durch Umsetzung des Polymerisats a) mit der Organosilanverbindung b) in Anwesenheit eines radikalischen Initiators und eines Kondensationskatalysators, bei Temperaturen von 180 bis 280°C, Drücken von 1 bis 100 bar und mittleren Verweilzeiten des Reaktionsgemisches von 0,2 bis 10 Minuten.

2. Teilvernetzte Kunststoffmassen nach Anspruch 1, die als weiteren Bestandteil
d) ein kautschukartiges Material mit einer Shore A-Härte von 30 bis 90 enthalten.

3. Teilvernetzte Kunststoffmassen nach den Ansprüchen 1 oder 2, wobei die Polymerisate a), c) und d) in folgenden Mengenverhältnissen, bezogen auf 100 Gew.-Teile, verwendet werden:
mindestens 40 Gew.-Teile Polymerisat a)
bis zu 60 Gew.-Teile statistisch verteiltes Ethylencopolymerisat c)
0 bis 40 Gew.-Teile kautschukartiges Material d).

4. Teilvernetzte Kunststoffmassen nach den Ansprüchen 1 bis 3, wobei man pro 100 Gew.-Teile der Polymerisate a), c) und, falls vorhanden, d), 0,05 bis 5 Gew.-Teile der Organosilanverbindung b), 0,001 bis 2 Gew.-Teile des radikalischen Initiators und 0,001 bis 0,1 Gew.-Teile des Kondensationskatalysators verwendet.

5. Teilvernetzte Kunststoffmassen nach den Ansprüchen 1 bis 4, wobei das Polymerisat a) aus 35 bis 95 Gew.-% eines Propylencopolymerisats (I) mit 0,2 bis 12 Gew.-% einpolymerisierter C₂-C_{1Q}-Alk-1-ene und aus 5 bis 65 Gew.-% eines Propylencopolymerisats (11) mit 20 bis 75 Gew.-% einpolymerisierter C₂-Cᵢₒ-Alk-1-ene besteht.

6. Teilvernetzte Kunststoffmassen nach den Ansprüchen 1 bis 5, in deren Organosilanverbindung b) n für 3 steht.

7. Verfahren zur Herstellung von teilvernetzten Kunststoffmassen gemäß den Ansprüchen 1 bis 6, dadurch gekennzeichnet, daß man die Organosilanverbindung b) zusammen mit dem radikalischen Initiator und dem Kondensationskatalysator, sowie dem statistisch verteilten Ethylencopolymerisat c) und gegebenenfalls dem kautschukartigen Material d), dem Polymerisat a) unmittelbar nach dessen Herstellung in einer, an den Herstellungsreaktor angeschlossenen Mischapparatur hinzusetzt.

8. Verwendung der teilvernetzten Kunststoffmassen gemäß den Ansprüchen 1 bis 6 zur Herstellung von Folien und Formkörpern.

## Claims

1. A partially crosslinked plastics material having a melt flow index of from 0.1 to 100 g/10 min at 230°C and under a weight of 2.16 kg, containing
a) a polymer of from 25 to 97% by weight of a propylene copolymer (I) which contains from 0.1 to 15% by weight of polymerized C₂-C₁₀-alk-1-enes and of from 3 to 75% by weight of a further propylene copolymer (II) which contains from 15 to 80% by weight of polymerized C₂-Cᵢₒ-alk-1-enes,
b) an organosilane compound of the following formula (I) 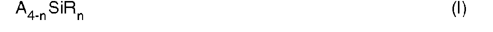 where the radicals A are identical or different and are each an acrylate or methacrylate or vinyl, the radicals R are identical or different and are each C₁-Cₛ-alkoxy or C₁-C₈-acetoxy and n is 1, 2 or 3, and
c) a random ethylene copolymer containing from 5 to 20% by weight of polymerized C₃-C₁₀-alk-1-enes and having a density at room temperature of from 0.89 to 0.925 g/cm³,
obtainable by reacting the polymer a) with the organosilane compound b) in the presence of a free radical initiator and a condensation catalyst at from 180 to 280°C and from 1 to 100 bar and in the course of average residence times of the reaction mixture of from 0.2 to 10 minutes.

2. A partially crosslinked plastics material as claimed in claim 1, which contains, as a further component, d) a rubber-like material having a Shore A hardness of from 30 to 90.

3. A partially crosslinked plastics material as claimed in claim 1 or 2, wherein the polymers a), c) and
d) are used in the following ratio, based on 100 parts by weight:
at least 40 parts by weight of polymer a)
up to 60 parts by weight of random ethylene copolymer c) from 0 to 40 parts by weight of rubber-like material d).

4. A partially crosslinked plastics material as claimed in any of claims 1 to 3, wherein from 0.05 to 5 parts by weight of the organosilane compound b), from 0.001 to 2 parts by weight of the free radical initiator and from 0.001 to 0.1 part by weight of the condensation catalyst are used per 100 parts by weight of the polymer a), c) and, where present, d).

5. A partially crosslinked plastics material as claimed in any of claims 1 to 4, wherein the polymer a) consists of from 35 to 95% by weight of a propylene copolymer (I) containing from 0.2 to 12% by weight of polymerized C₂-C₁₀- alk-1-enes and of from 5 to 65% by weight of a propylene copolymer (II) containing from 20 to 75% by weight of polymerized C₂-Cᵢₒ-alk-1-enes.

6. A partially crosslinked plastics material as claimed in any of claims 1 to 5, in whose organosilane compound b) n is 3.

7. A process for the preparation of a partially crosslinked plastics material as claimed in any of claims 1 to 6, wherein the organosilane compound b) together with the free radical initiator and the condensation catalyst and also the random ethylene copolymer c) and, if required, the rubber-like material d) is added to the polymer a) immediately after its preparation in a mixing apparatus connected to the preparation reactor.

8. The use of a partially crosslinked plastics material as claimed in any of claims 1 to 6 for the production of films and moldings.

## Revendications

1. Masses de matière plastique partiellement réticulées, ayant un indice d'écoulement à l'état fondu de 0,1 à 100 g/ 10 min à 230°C et sous un poids de 2,16 kg, contenant
a) un polymère composé de 25 à 97% en poids d'un copolymère de propylène (I) qui contient 0,1 à 15% en poids d'alc-1-ènes en C₂-C₁₀ en liaison polymère, et de 3 à 75% en poids d'un autre copolymère de propylène (II) qui renferme 15 à 80% en poids d'alc1-ènes en C₂-C₁₀ en liaison polymère,
b) un composé de type organosilane répondant à la formule (I) suivante 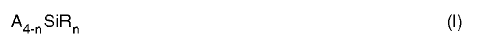 les restes A étant semblables ou différents et étant mis pour des esters d'acide acrylique ou méthacrylique ou pour des groupements vinyle, les restes R étant identiques ou différents et représentant des groupements alcoxy en C₁-C₈ ou acétoxy en C₁-C₈, et n étant mis pour le nombre 1, 2 ou 3,
c) un copolymère d'éthylène réparti statistiquement, renfermant 5 à 20% en poids d'alc-1-énes en C₃-Ci ₒ en liaison polymère et ayant une masse volumique à la température ambiante de 0,89 à 0,925 g/cm³,
obtenues par réaction du polymère a) avec le composé de type organosilane b) en présence d'un amorceur radicalaire et d'un catalyseur de condensation, à des températures de 180 à 280°C, sous des pressions de 1 à 100 bar et avec des durées moyennes de séjour du mélange réactionnel de 0,2 à 10 min.

2. Masses de matière plastique partiellement réticulées selon la revendication 1, qui contiennent, comme autre constituant,
d) une matière caoutchouteuse ayant une dureté Shore A de 30 à 90.

3. Masses de matière plastique partiellement réticulées selon la revendication 1 ou 2, dans lesquelles les polymères a), c) et d) sont utilisés dans les proportions suivantes, par rapport à 100 parties en poids:
au moins 40 parties en poids de polymère a),
jusqu'à 60 parties en poids de copolymère d'éthylène réparti statistiquement c),
0 à 40 parties en poids de matière caoutchouteuse d).

4. Masses de matière plastique partiellement réticulées selon l'une quelconque des revendications 1 à 3, dans lesquelles on utilise, pour 100 parties en poids des polymères a), c) et, au cas où il est présent, d), de 0, 05 à 5 parties en poids du composé de type organosilane b), de 0,001 à 2 parties en poids de l'amorceur radicalaire et de 0,001 à 0,1 partie en poids du catalyseur de condensation.

5. Masses de matière plastique partiellement réticulées selon l'une quelconque des revendications 1 à 4, dans lesquelles le polymère a) se compose de 35 à 95% en poids d'un copolymère de propylène (I) avec 0,2 à 12% en poids d'alc-1-ènes en C₂-C₁₀ en liaison polymère, et de 5 à 65% en poids d'un copolymère de propylène (II) avec 20 à 75% en poids d'alc-1-ènes en C₂-C₁₀ en liaison polymère.

6. Masses de matière plastique partiellement réticulées selon l'une quelconque des revendications 1 à 5, dans le composé de type organosilane b) desquelles n est mis pour 3.

7. Procédé de préparation de masses de matière plastique partiellement réticulées selon l'une quelconque des revendications 1 à 6, caractérisé en ce que l'on ajoute le composé de type organosilane b), en même temps que l'amorceur radicalaire et le catalyseur de condensation, ainsi que le copolymère d'éthylène réparti statistiquement c) et éventuellement la matière caoutchouteuse d), au polymère a) immédiatement après la préparation de celui- ci, dans un appareil mélangeur disposé à la suite du réacteur de préparation.

8. Utilisation des masses de matière plastique partiellement réticulées selon l'une quelconque des revendications 1 à à pour la fabrication de feuilles et de corps moulés.
